# EUROPÄISCHE PATENTSCHRIFT

(11) **EP 1 563 198 B1**
(45) Veröffentlichungstag und Bekanntmachung des Hinweises auf die Patenterteilung: **04.04.2007**
(21) Anmeldenummer: 03775366.2
(22) Anmeldetag: 18.11.2003
(51) Int. Cl.: F16D 21/06

(54) **DOPPELKUPPLUNGSANORDNUNG**
DUAL-CLUTCH ASSEMBLY
SYSTEME A DOUBLE EMBRAYAGE

(30) Priorität: 22.11.2002 DE 10254900
(43) Veröffentlichungstag der Anmeldung: 17.08.2005
(73) Patentinhaber: ZF Sachs AG, 97424 Schweinfurt (DE)
(72) Erfinder: FELDHAUS, Reinhard, 97646 Niederwerrn (DE); HEIARTZ, Markus, 97084 Würzburg (DE); KISTER, Igor, 97080 Würzburg (DE); DÖGEL, Thomas, 97688 Bad Kissingen (DE); VOGT, Sebastian, 97616 Bad Neustadt (DE)
(86) Internationale Anmeldenummer: PCT/EP2003/012869
(87) Internationale Veröffentlichungsnummer: WO 2004/048794

(56) Entgegenhaltungen:
- EP-A- 1 174 632
- EP-A- 1 195 537
- EP-A- 1 275 867
- EP-A- 1 302 687
- DE-A- 10 155 458

## Beschreibung

### Technisches Gebiet

Die vorliegende Erfindung betrifft eine Doppelkupplungsanordnung, umfassend eine Torsionsschwingungsdämpferanordnung mit einer Primärseite, welche mit einem Antriebsorgan zur gemeinsamen Drehung um eine Drehachse fest koppelbar ist, und einer Sekundärseite, welche gegen die Wirkung einer Dämpferelementenanordnung bezüglich der Primärseite um die Drehachse drehbar ist, sowie eine Doppelkupplung mit einem Eingangsbereich und zwei Ausgangsbereichen, wobei jeder der Ausgangsbereiche mit einem von zwei Abtriebsorganen drehfest koppelbar ist.

### Stand der Technik

Aus der DE 101 55 458 A1 ist eine gattungsgemäße Doppelkupplungsanordnung bekannt, bei welcher die Primärseite einer Torsionsschwingungsdämpferanordnung über Schraubbolzen fest mit einer Antriebswelle als Antriebsorgan gekoppelt ist. Die Sekundärseite der Torsionsschwingungsdämpferanordnung ist über eine Lagerung an der Primärseite sowohl in axialer als auch in radialer Richtung fest abgestützt und bezüglich dieser drehbar. Der Eingangsbereich der Doppelkupplung ist im Wesentlichen starr mit der Sekundärseite der Torsionsschwingungsdämpferanordnung gekoppelt, wobei hier lediglich eine Axialbewegbarkeit dieser beiden Baugruppen bezüglich einander vorgesehen ist und durch eine bezüglich eines Getriebegehäuses sich abstützende Vorspannfeder der Eingangsbereich der Doppelkupplung in Richtung auf die Torsionsschwingungsdämpferanordnung zu vorgespannt ist.

Ein wesentliches Problem derartiger der Drehmomentübertragung zwischen einem Antriebsaggregat und einem Getriebe dienender Systeme ist, dass insbesondere im eingerückten Zustand von einem der Kupplungsbereiche der Doppelkupplung eine mechanische Überbestimmung vorliegt. D.h., weisen verschiedene Baugruppen zueinander einen Achsversatz oder eine Achsneigung auf, so wird dies durch die Überbestimmung zu Zwängungen oder Belastungen führen, die die vorhandenen Lagerungen bzw. Abstützbereiche erheblich beaufschlagen.

### Aufgabe der Erfindung

Das Ziel der vorliegenden Erfindung ist es, eine Doppekupplungsanordnung bereitzustellen, bei welcher durch Wellenversatz oder Wellenneigung eingeführte Bewegungsungleichförmigkeiten nicht zu einer Überlastung von Lagerungsbereichen führen können.

### Darstellung der Erfindung

Gemäß einem ersten Aspekt der vorliegenden Erfindung wird die eingangs genannte Aufgabe gelöst durch eine Doppelkupplunganordnung, umfassend eine Torsionsschwingungsdämpferanordnung mit einer Primärseite, welche mit einem Antriebsorgan zur gemeinsamen Drehung um eine Drehachse fest koppelbar ist, und einer Sekundärseite, welche gegen die Wirkung einer Dämpferelementenanordnung bezüglich der Primärseite um die Drehachse drehbar ist, eine Doppelkupplung mit einem Eingangsbereich und zwei Ausgangsbereichen, wobei jeder der Ausgangsbereiche mit einem von zwei Abtriebsorganen drehfest koppelbar ist, wobei der Eingangsbereich der Doppelkupplung bezüglich der Sekundärseite der Torsionsschwingungsdämpferanordnung einerseits und bezüglich einer feststehenden Baugruppe andererseits jeweils über eine elastische Kopplungsanordnung abgestützt ist. Dabei ist vorgesehen, dass die elastischen Kopplungsanordnungen eine Bewegung des Eingansgsbereichs der Doppelkupplung in Radialrichtung oder/und in Axialrichtung zulassen.

Da bei dieser Anordnung der Eingangsbereich der Doppelkupplung sowohl mit der Torsionsschwingungsdämpferanordnung als auch an eine feststehende Baugruppe, welche auch wieder als Getriebegehäuse ausgebildet sein kann, unter Einbeziehung von Elastizitäten angekoppelt ist, kann der Eingangsbereich der Doppelkupplung Ausgleichsbewegungen durchführen, ohne dass es im Bereich von der Lagerung dienenden Systemkomponenten zu Zwängungen und somit Überlastungen kommt.

Um insbesondere in der Torsionsschwingungsdämpferanordnung für eine definierte Abstützung zu sorgen, wird vorgeschlagen, dass die Sekundärseite der Torsionsschwingungsdämpferanordnung über eine Axiallagerung und eine Radiallagerung an der Primärseite der Torsionsschwingungsdämpferanordnung abgestützt ist.

Vorzugsweise kann dabei vorgesehen sein, dass die festehende Baugruppe ein Getriebegehäuse umfasst.

Gemäß einem zweiten Aspekt der vorliegenden Erfindung wird eine Doppelkupplungsanordnung vorgeschlagen, umfassend eine Torsionsschwingungsdämpferanordnung mit einer Primärseite, welche mit einem Antriebsorgan zur gemeinsamen Drehung um eine Drehachse fest koppelbar ist, und einer Sekundärseite, welche gegen die Wirkung einer Dämpferelementenanordnung bezüglich der Primärseite um die Drehachse drehbar ist, eine Doppelkupplung mit einem Eingangsbereich und zwei Ausgangsbereichen, wobei jeder der Ausgangsbereiche mit einem von zwei Abtriebsorganen drehfest koppelbar ist, wobei die Sekundärseite der Torsionsschwingungsdämpferanordnung bezüglich der Primärseite der Torsionsschwingungsdämpferanordnung über eine Axial/Radial-Lagerungsanordnung abgestützt ist, welche ein Verkippen der Sekundärseite bezüglich der Primärseite zulässt, wobei die Sekundärseite der Torsionsschwingungsdämpferanordnung mit dem Eingangsbereich der Doppelkupplung über eine Kopplungsanordnung drehfest gekoppelt ist, welche ein Verkippen der Sekundärseite bezüglich des Eingangsbereichs zulässt. Damit kann die Sekundärseite als Ausgleichsglied wirksam sein, das einen möglichen Achsversatz zwischen der Primärseite und somit beispielsweise einer Antriebswelle und dem Eingangsbereich der Doppelkupplung und somit beispielsweise einer Abtriebswelle kompensieren kann.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer nicht erfindungsgemäßen Doppelkupplungsanordnung;
- Fig.2: eine der Fig. 1 entsprechende Ansicht einer abgewandelten Ausgestattungsform nach dem ersten Aspekt der Erfindung;
- Fig.3: eine der Fig. 1 entsprechende Ansicht einer abgewandelten Ausgestaltungsform nach dem zweiten Aspekt der Erfindung;
- Fig.4: eine der Fig. 1 entsprechende Ansicht einer abgewandelten Ausgestaltungsform nach dem zweiten Aspekt der Erfindung.

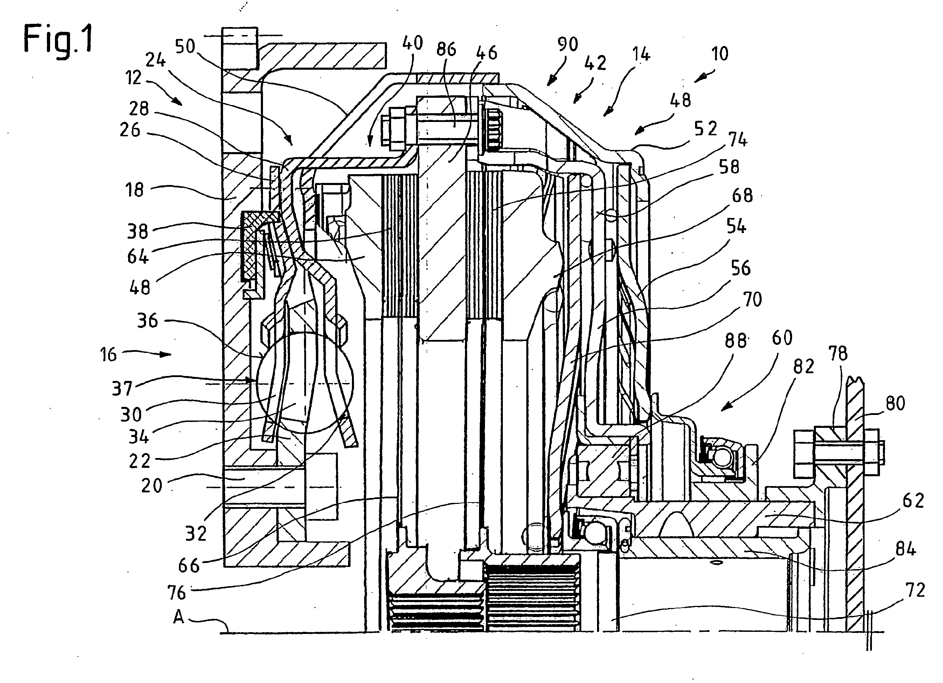

In Fig. 1 ist eine Doppelkupplungsanordnung mit 10 bezeichnet. Die Doppelkupplungsanordnung 10 umfasst zwei Systembereiche. Dies ist zum einen eine Torsionsschwingungsdämpferanordnung 12, hier als Zweimassenschwungrad ausgeführt und ist zum anderen eine Doppelkupplung 14.

Die Torsionsschwingungsdämpferanordnung 12 umfasst eine Primärseite 16, die im Wesentlichen eine Primärmasse 18 und mit dieser durch Schraubbolzen 20 fest verbunden ein Zentralscheibenelement 22 umfasst. Durch die Schraubbolzen 20 wird die Primärseite 16 drehfest an ein Antriebsorgan, beispielsweise eine Kurbelwelle einer Brennkraftmaschine, angekoppelt.

Die Torsionsschwingungsdämpferanordnung 12 umfasst weiterhin eine Sekundärseite 24. Diese ist im Wesentlichen gebildet aus zwei beispielsweise durch Umformung von Blechteilen gebildeten Deckscheibenelementen 26, 28. In ihrem radial inneren Bereich liegen diese beiden Deckscheibenelemente 26, 28 beidseits des Zentralscheibenelements 22. Radial außen sind sie beispielsweise durch Verschraubung, Vernietung, Verschweißung o.dgl. fest verbunden.

In den beiden Deckscheibenelementen 26, 28 und dem Zentralscheibenelement 22 sind an mehreren Umfangspositionen Federfenster 30, 32, 34 vorgesehen. Die Federfenster 30, 32, 34 weisen einander entsprechende Umfangserstreckungen - bezogen auf eine Drehachse A - auf und dienen zur Aufnahme jeweiliger Dämpferfedern 36, die in ihrer Gesamtheit eine Dämpferelementenanordnung 37 bilden. In Umfangsrichtung sind diese Dämpferfedern 36 unter Kompression in den Federfenstern 30, 32, 34 aufgenommen. Die Deckscheibenelemente 26, 28 sind unter Kompression dieser Federn 36 bezüglich des Zentralscheibenelements 32 verdrehbar, wodurch grundsätzlich auch die Primärseite 16 bezüglich der Sekundärseite 24 um die Drehachse A verdrehbar ist. Um bei dieser Relativdrehung, die bei Auftreten von überhöhten Drehmomentschwankungen auftreten kann, Schwingungsenergie dissipieren zu können, kann eine permanent oder verschleppt wirkende Festreibeinrichtung 38 bekannter Bauart zwischen der Primärseite 16 und der Sekundärseite 24 wirken.

Die Doppelkupplung 14 umfasst im Wesentlichen zwei Kupplungsbereiche 40, 42. Der erste Kupplungsbereich 40 weist eine Anpressplatte 44 auf, die durch Tangentialblattfedern o.dgl. mit einer ringscheibenartigen Widerlagerplatte 46 drehfest, bezüglich dieser jedoch axial bewegbar gekoppelt ist. Eine Betätigungskraftübertragungsanordnung 48 des ersten Kupplungsbereichs 40 umfasst zwei beispielsweise topfartig ausgebildete Kraftübertragungsteile 50, 52, die die Widerlagerplatte 46 axial überbrücken. Das Kraftübertragungselement 50 ist, beispielsweise über eine Verschleißnachstellvorrichtung, an der Anpressplatte 48 abgestützt. Das Kraftübertragungselement 52 steht unter Beaufschlagungswirkung einer Kraftbeaufschlagungsanordnung 54, die wiederum an einem Bodenbereich 56 einer mit der Widerlagerplatte 46 fest verbundenen Gehäuseanordnung 58 abgestützt ist. Ein Betätigermechanismus 60 beaufschlagt den radial inneren Bereich der Kraftbeaufschlagungsanordnung 54, wobei der Betätigermechanismus 60 hier nur symbolhaft dargestellt ist und im Wesentlichen repräsentiert ist durch ein Drehentkopplungslager, das zur Durchführung von Einrückvorgängen entlang eines Stützelements 62 axial verlagerbar ist, um den radial inneren Bereich der Kraftbeaufschlagungsanordnung 54 in Richtung auf die Torsionsschwingungsdämpferanordnung 12 zu zu verlagern und dabei die Betätigungskraftübertragungsanordnung 48 in der entgegengesetzten Richtung zu verschieben und die Anpressplatte 48 in Richtung auf die Widerlagerplatte 46 zu zu verschieben. Dadurch werden die Reibbeläge 64 einer Kupplungsscheibe 66 eingeklemmt und ein Drehmoment über diesen ersten Kupplungsbereich 40 auf eine mit der Kupplungsscheibe drehfest koppelbare Getriebeeingangswelle übertragen.

Der zweite Kupplungsbereich 42 weist ebenfalls eine Anpressplatte 68 auf, die mit der Widerlagerplatte 46 bzw. dem Gehäuse 58 beispielsweise wiederum über Tangentialblattfedern o.dgl., drehfest gekoppelt ist, bezüglich dieser Baugruppe jedoch in Richtung der Drehachse A verlagerbar ist. Eine Kraftbeaufschlagungsanordnung 70 des zweiten Kupplungsbereichs 42 ist radial außen am Bodenbereich 56 des Gehäuses 58 abgestützt und kann radial weiter innen die Anpressplatte 68 beaufschlagen. Am radial inneren Ende dieser Kraftbeaufschlagungsanordnung 70 greift ein Betätigermechanismus 72 an, so dass bei Bewegung des auch hier durch ein Drehentkopplungslager im Wesentlichen repräsentierten Mechanismus dieses Lager wiederum entlang bzw. in Achsrichtung bezüglich des Stützelements 62 verlagert werden kann und durch Bewegung der Kraftbeaufschlagungsanordnung 70 in Richtung auf die Anpressplatte 68 zu diese in Richtung auf die Widerlagerplatte 46 zu bewegen kann. Dabei werden die Reibbeläge 74 einer Kupplungsscheibe 76 zwischen der Anpressplatte 68 und der Widerlagerplatte 46 geklemmt, so dass in diesem Einrückzustand des zweiten Kupplungsbereichs 42 über diesen ein Drehmoment zu einer zweiten Getriebeeingangswelle übertragen werden kann, die koaxial zu der vorangehend bereits angesprochenen ersten Getriebeeingangswelle positioniert ist. Die beiden Kupplungsscheiben 66, 76 bilden jeweilige Ausgangsbereiche der Kupplungsbereiche 40, 42.

Hinsichtlich der beiden Betätigermechanismen 60, 72 sei ausgeführt, dass zur Erzeugung der Axialbewegung derselben bzw der Drehentkopplungslager derselben hydraulische, pneumatische oder mechanisch wirkende Systeme eingesetzt werden kann. Ferner ist es möglich, dass an dem Abstützelement 62, das über ein Trägerelement 78 an einem Getriebegehäuse 80 oder dergleichen festgelegt ist, an einer Innenumfangsseite und einer Außenumfangsseite jeweilige Gewindeformationen vorhanden sind, die jeweils ein Gegenstück in auf dem Abstützelement 62 drehbar getragenen Elementen 82, 84 finden, so dass eine Drehung dieser Elemente 82, 84 gleichzeitig auch zur Axialverlagerung derselben und zur Durchführung von Ein- bzw. Auskuppelvorgängen führt.

Es sei darauf hingewiesen, dass in verschiedenen Bereichen die vorangehend beschriebene Doppelkupplung 10 ebenso wie der vorangehend beschriebene Torsionsschwingungsdämpfer 12 anders ausgestaltet sein können. So kann die Doppelkupplung an Stelle des vorangehend beschriebenen Normal-Offen-Aufbaus, bei welchem eine Einrückkraft in den jeweiligen Betätigermechanismen 60, 72 erzeugt werden muss, bei Einsatz von Kraftspeichern zumindest einer der Kupplungsbereiche 40, 42 als Normal-Geschlossen-System ausgebildet sein.

Man erkennt bei dem in Fig. 1 gezeigten Aufbau, dass im Bereich der Torsionsschwingungsdämpferanordnung 12 keine Axial- oder Radial-Lagerungsanordnung zwischen der Primärseite 16 und der Sekundärseite 24 vorhanden ist. Eine kraftmäßige Abstützung erfolgt hier alleine über die Dämpferelementenanordnung 37 bzw. die jeweiligen Federn 36 derselben. Auf Grund der Tatsache, dass -zwischen den Deckscheibenelementen 26, 28 und dem Zentralscheibenelement 22 im Allgemeinen Zwischenraum vorhanden ist, ist hier eine gewisse Bewegungsfreiheit zwischen der Primärseite und der Sekundärseite 24 vorhanden, die nicht durch irgendwelche Lagerungen beschränkt ist. Die Lagerung der Sekundärseite 24 erfolgt dadurch, dass diese über das Deckscheibenelement 28 durch Schraubbolzen 86 fest mit der Widerlagerplatte 46 und somit auch dem Gehäuse 58 verbunden ist. Das Gehäuse 58 ist jedoch über ein weiteres Drehentkopplungslager 88 sowohl axial als auch radial an dem Abstützelement 62 getragen, das wiederum bezüglich des Getriebegehäuses 80 fest getragen ist. Somit ist die Sekundärseite 24 im Wesentlichen fest an den Eingangsbereich 90 der Doppelkupplung 10 angebunden, welcher Eingangsbereich 90 wiederum axial und radial fest bezüglich des Getriebegehäuses 80 getragen ist, bezüglich diesem aber auch drehbar gehalten ist. Es sei hier noch angeführt, dass der Eingangsbereich 90 der Doppelkupplung 10 im Wesentlichen die Widerlagerplatte 46, das Gehäuse 58 und die damit drehfest gekoppelten Komponenten, wie insbesondere die Anpressplatten 48, 68, umfasst. Auch verschiedene der Betätigung dienende Systemkomponenten, wie die Betätigungskraftübertragungsanordnung 48, können diesem Eingangsbereich 90 zugerechnet werden.

Durch diesen Aufbau wird es möglich, einen Achsversatz bzw. eine Achsneigung zwischen der Antriebswelle und den Abtriebswellen zu kompensieren, da insbesondere im Bereich der Torsionsschwingungsdämpferanordnung 12 Relativbewegungen zwischen der Primärseite 16 und der Sekundärseite 24 auftreten können, und zwar sowohl in radialer, als auch in axialer Richtung. Auch ist die Durchführung von Taumelbewegungen in diesem Bereich möglich.

Der Zusammenbau dieser Doppelkupplungsanordnung 10 erfolgt derart, dass zunächst die Torsionsschwingungsdämpferanordnung 12 radial innen durch die Schraubbolzen 20 an das Antriebsaggregat angebunden wird. Darauf folgend wird die mit einem Getriebe bereits zusammengefügte Doppelkupplung 14 axial herangeführt, und es kann dann die Schraubverbindung mittels der Schraubbolzen 86 hergestellt werden. Somit hat diese Schraubverbindung sowohl eine Drehkopplungsfunktion, als auch die Funktion der axialen Festlegung. Hier ist es beispielsweise möglich, die Drehkopplungsfunktion in anderer Art und Weise, durch Verzahnungsanordnungen, durch Drehkopplungsstifte o.dgl., zu realisieren, während zur festen axialen Halterung weiterhin Schraubbolzen o.dgl., eingesetzt werden.

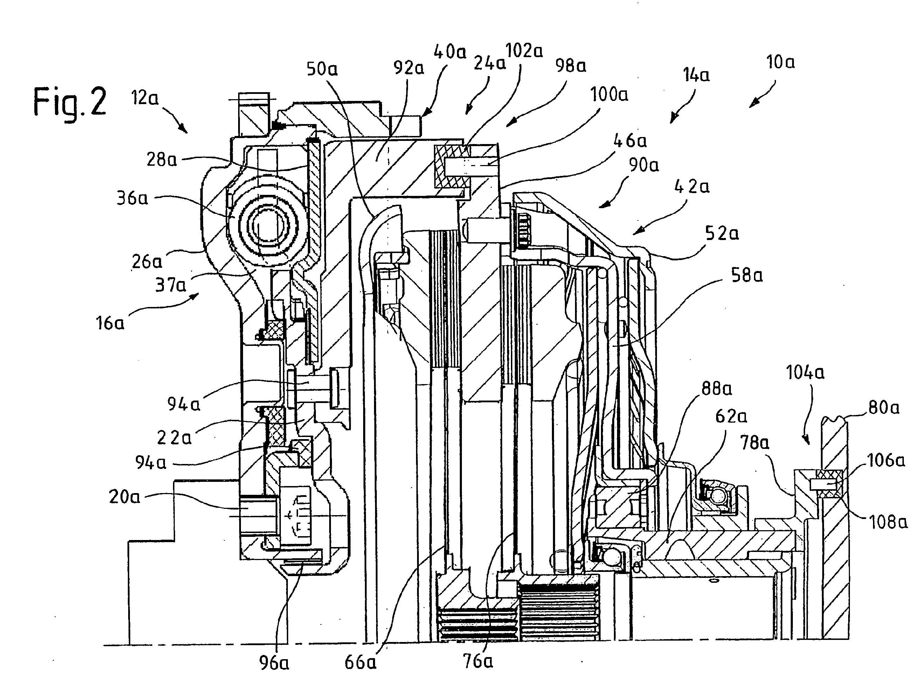

In Fig. 2 ist eine Ausgestaltungsform einer erfindungsgemäßen Doppelkupplungsanordnung gezeigt, bei welcher Komponenten, welche vorangehend beschriebenen Komponenten hinsichtlich Aufbau bzw. Funktion entsprechen, mit dem gleichen Bezugszeichen unter Hinzufügung eines Anhangs "a" bezeichnet sind. Der prinzipielle Aufbau entspricht hier dem vorangehend beschriebenen, so dass nurauf die Unterschiede eingegangen wird.

Man erkennt zunächst im Bereich des Torsionsschwingungsdämpfers 12a, dass nunmehr die beiden Deckscheibenelemente 26a, 28a im Wesentlichen die Primärseite 16a bilden, während das Zentralscheibenelement 22a zusammen mit einem Masseteil 92a, diese beiden Teile sind durch Nietbolzen 94a fest miteinander verbunden, im Wesentlichen die Sekundärseite bildet. Über einen Axiallagerring 94a ist das Zentralscheibenelement 22a bezüglich der Primärseite 16a axial abgestützt. Über ein Radiallagerelement 96a, das zwischen jeweiligen axial sich erstreckenden, zylindrischen Abschnitten des Deckscheibenelements 26a und des Zentralscheibenelements 22a positioniert ist, ist eine Radiallagerung dieser beiden Baugruppen bezüglich einander vorgesehen.

Die Doppelkupplung 14a, deren Aufbau im Wesentichen dem vorangehend beschriebenen Aufbau entspricht, ist im Eingangsbereich 90a, hier im Bereich der Widerlagerplatte 46a, mit dem Masseteil 92a der Sekundärseite 24a gekoppelt. Hierzu ist eine elastisch wirksame Kopplungsanordnung 98a vorgesehen. Diese kann beispielsweise an der Widerlagerplatte 46a mehrere Kopplungsstifte 100a umfassen, die in an dem Masseteil 92a vorgesehenes bzw. teilweise darin eingebettetes Elastomermaterial 102a eingreifen. Auf diese Art und Weise ist der Eingangsbereich 90a der Doppelkupplung 14a elastisch mit der Sekundärseite 24a der Torsionsschwingungsdämpferanordnung 12a gekoppelt.

Auch die Ankopplung bzw. Abstützung des Eingangsbereichs 90a der Doppelkupplung 14a bezüglich eines feststehenden Systembereichs, also beispielsweise wieder bezüglich des Getriebegehäuses 80a, erfolgt über eine elastisch wirksame Kopplungsanordnung 104a. Diese kann beispielsweise an dem vorangehend bereits angesprochenen Trägerelement 78a wieder Kopplungsstifte 106a umfassen, die in Elastomermaterial 108a eingreifen. Dieses Elastomermaterial 108a ist an dem Getriebegehäuse 80a getragen bzw. teilweise darin eingebettet. Somit ist über das Gehäuse 58a, das Drehentkopplungslager 88a und das Abstützelement 62a die Doppelkupplung 14a mit ihrem Eingangsbereich 90a- aucham anderen axialen Bereich elastisch gelagert. Somit ist trotz an sich vorhandener Überbestimmung der Anzahl an Fixpunkten oder Festlegungspunkten auf Grund der eingeführten Elastizität im Bereich der beiderseitigen Ankopplung der Doppelkupplung 14a dafür gesorgt, dass Ausgleichsbewegungen stattfinden können, um Achsversätze bzw. Achsrelativneigungen kompensieren zu können.

Auch bei dieser Anordnung wird zunächst wieder die Doppelkupplung 14a am Getriebe festgesetzt, während die Torsionsschwingungsdämpferanordnung 12a am Antriebsaggregat festgelegt wird. Diese beiden Systembereiche werden dann axial aneinander herangeführt, so dass die Stifte 100a in das Elastomermaterial 102a eingeführt werden. Auf diese Art und Weise erfüllen die Stifte 100a mit dem Elastomermaterial 102a gleichzeitig auch die Funktion der Drehkopplung. Es sei darauf hingewiesen, dass hier jedwedes Elastomermaterial zum Einsatz kommen kann, das entsprechende Belastungen aufnehmen kann, wie z.B. Natur- oder Synthesekautschukmaterial. Hier können vorzugsweise an mehreren Umfangspositionen mit diesem Elastomermaterial umspritzte Metallbuchsen vorgesehen werden.

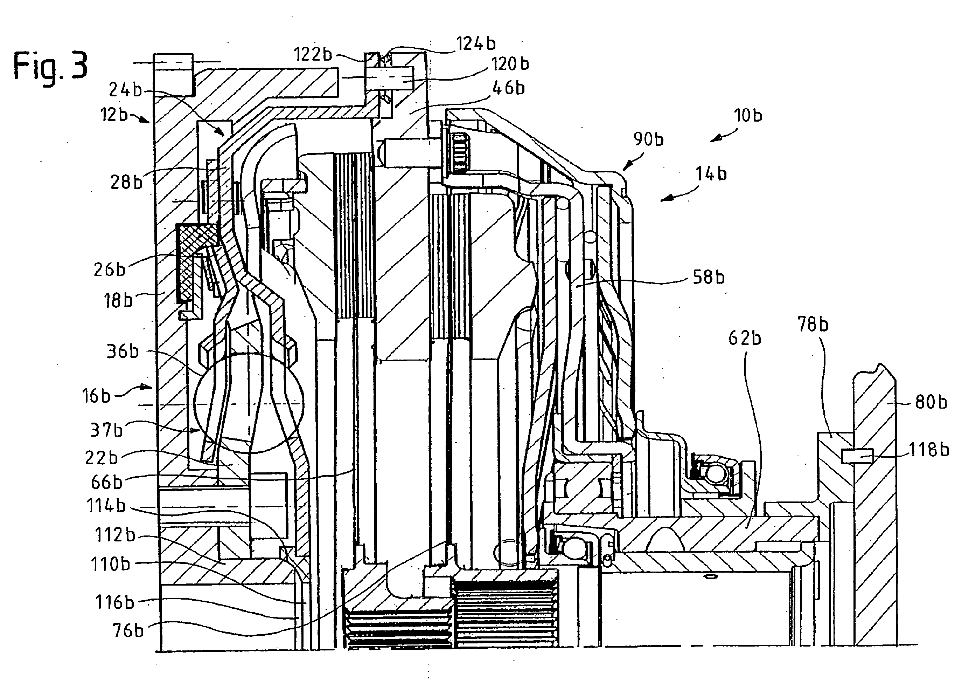

Eine weitere Ausgestaltungsform einer erfindungsgemäßen Doppelkupplungsanordnung ist in Fig. 3 gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "b" beschrieben. Auch hier wird im -Folgenden nur auf die vorhandenen konstruktiven Unterschiede eingegangen.

Bei der in Fig. 3 dargestellten Ausgestaltungsvariante der Doppelkupplungsanordnung 10b, bei welcher die Torsionsschwingungsdämpferanordnung 12b in ihrem Aufbau im Wesentlichen der mit Bezug auf die Fig. 1 beschriebenen Variante entspricht, ist die Sekundärseite 24b der Torsionsschwingungsdämpferanordnung 12b über eine im Wesentlichen einen Lagerungsring 110b umfassende Lagerungsanordnung bezüglich der Primärseite 16b, nämlich bezüglich eines radial innen liegenden zylindrischen Ansatzes 112b des Masseteils 18b abgestützt: An seinem axialen Ende weist dieser zylindrische Ansatz 112b eine ballige oder konvex gewölbte Endfläche 114b auf. In Zuordnung zu dieser balligen oder konvex gewölbten Fläche 114b weist der Lagerring 110b eine konkav gewölbte Ringfläche 116b, die an der Fläche 114b des Masseteils 18b aufliegt. Das Deckscheibenelement 28b der Sekundärseite 24b ist in seinem radial inneren Bereich auf dem Lagerring 110b getragen. Auf Grund der mit Bezug auf die Fig. 1 bereits angesprochenen grundsätzlichen Bewegbarkeit der beiden Deckscheibenelemente 26b, 28b bezüglich des Zentralscheibenelements 22b, welche durch den Lagerring 110b und dessen Bewegbarkeit auf der konvex gewölbten Fläche 114b im Wesentlichen nicht behindert wird, ist auch hier eine Taumelentkopplung zwischen der Primärseite 16b und der Sekundärseite 24b vorgesehen. Auch können geringfügige Relativaxialbewegungen dieser beiden Baugruppen bezüglich einander auftreten.

Die Doppelkupplung 14b ist mit ihrem Eingangsbereich 90b wiederum über das Abstützelement 62b und das Trägerelement 78b bezüglich einer feststehenden Baugruppe, also beispielsweise des Getriebegehäuses 80b, festgehalten. Hier können Kopplungsstifte 118 ebenso zum Einsatz kommen, wie die in Fig. 1 gezeigten Schraubbolzen. Auf diese Art und Weise ist eine definierte Halterung des Eingangsbereichs 90b, also im Wesentlichen auch des Gehäuses 58b und der Widerlagerplatte 46b vorgesehen. Um die angesprochene Taumelbewegbarkeit der Sekundärseite 24b bezüglich der Primärseite 16b zu ermöglichen, ist eine eine derartige Entkopplung zulassende Drehmitnahmekopplung zwischen dem Deckscheibenelement 28b und der Widerlagerplatte 46b vorgesehen. Hierzu sind beispielsweise an der Widerlagerplatte 46b Drehkopplungsstifte 120b vorgesehen, die in zugeordnete Öffnungen eines Radialflansches 122b des Deckscheibenelements 28b eingreifen. In Zuordnung zu jedem dieser Stifte 120b kann eine Tellerfeder 124b vorgesehen sein, die eine axiale Vorspannung für die Sekundärseite 24b vorsieht, so dass ein fester Anlagekontakt zwischen den beiden Flächen 114b, 116b realisiert ist. Um die vorangehend angesprochene Taumelentkopplung realisieren zu können, ist es hier vorteilhaft, im Bereich der Einpassung der Stifte 120b in die zugeordneten Öffnungen des Deckscheiberielements 28b ein zumindest geringfügiges und ein- Verkippen zulassendes Bewegungsspiel vorzusehen. Es sei darauf hingewiesen, dass selbstverständlich auch andere elastische Kopplungsanordnungen, wie z.B. die in Fig. 2 gezeigte Koppelanordnung oder eine Entkopplung durch Tangentialblattfedern o.dgl. realisiert sein kann. Auch ist es selbstverständlich möglich, andere Vorspannelemente, wie z.B. Federringe o. dgl., hier einzusetzen.

Der Zusammenbau dieser Ausgestaltungsform wird dadurch vorgenommen, dass zunächst wieder die Torsionsschwingungsdämpferanordnung 12b an der Antriebswelle angeschraubt wird. Danach wird die mit dem Getriebe bereits zusammengefügte Doppelkupplung 14b axial herangeführt und im Bereich der Stifte 120b die Kopplung mit dem Deckscheibenelement 28b realisiert. Hier kann auch derart vorgegangen werden, dass die Stifte 120b erst nach dem axialen Heranführen der Doppelkupplung 14b in zugeordnete Öffnungen eingesetzt werden.

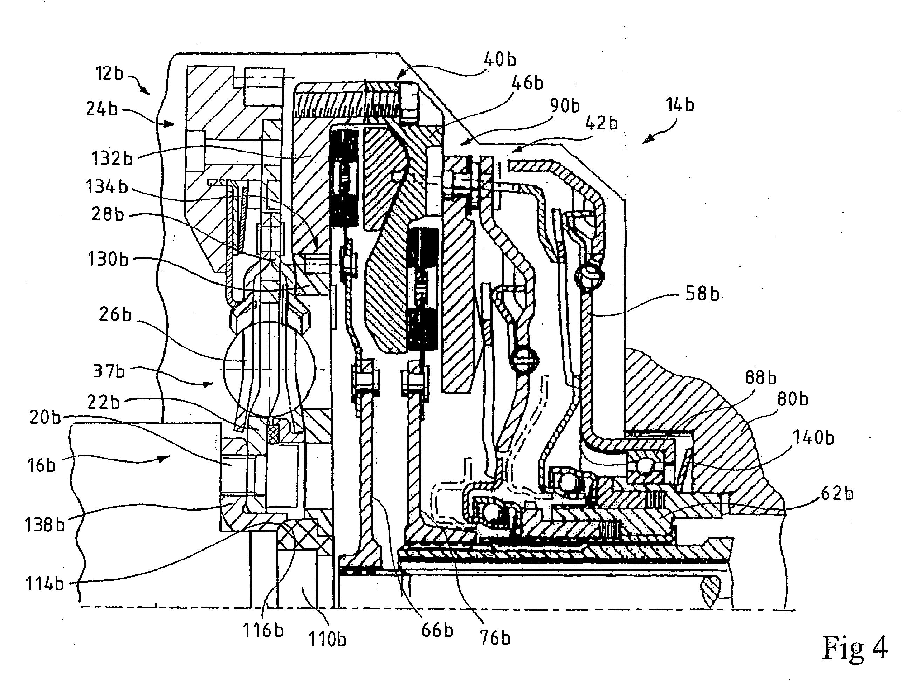

Eine Abwandlung der in Fig. 3 dargestellten Ausgestaltungsform ist in Fig. 4 gezeigt. Hier umfasst die Sekundärseite 24b zwei koaxial ineinander geschachtelte Ringscheibenelemente 130b und 132b. Das Ringscheibenelement 130b ist mit dem Deckscheibenelement 28b beispielsweise durch Vernietung fest verbunden, während das radial äußere Ringscheibenelement 132b durch Verschraubung mit dem Eingangsbereich 90b der Doppelkupplung 14b fest verbunden ist. In einem Eingriffsbereich 134b, in welchem diese beiden Ringscheibenelemente 130b, 132b aneinander angrenzen, sind diese beispielsweise durch Verzahnungsformationen und ggf. unter Zwischenlagerung von elastischen -Materialien derart miteinander entkoppelt, dass grundsätzlich zwar eine Drehmitnahmefunktion durch Formschluss realisiert ist, ansonsten aber das innere Ringscheibenelement 130b bezüglich des äußeren Ringscheibenelements 132b zumindest geringfügig verkippbar ist.

Auch bei dieser Ausgestaltungsform ist ein Lagerring 110b vorgesehen, an welchem nunmehr das innere Ringscheibenelement 130b der Sekundärseite 24b einerseits abgestützt ist, und welcher wiederum mit einer nunmehr konvex gewölbten Fläche 116b an einer entsprechend konkav gewölbten Fläche 114b der Primärseite 16b, nämlich an einem mit dem Zentralscheibenelement 22b durch die Schraubbolzen 20b gekoppelten Abstützelement 138b, abgestützt ist. Auf diese Art und Weise ist das innere Ringscheibenelement 130b zusammen mit den beiden Deckscheibenelementen 26b, 28b wiederum verkippbar bezüglich der Primärseite 16b.

Der Eingangsbereich 90b der Doppelkupplung 14b ist im Bereich seines Gehäuses 58b über das Drehentkopplungslager 88b und das vorangehend bereits angesprochene Abstützelement 62b bezüglich des Getriebegehäuses 80b abgestützt, wobei hier eine Vorspannfeder 140b dafür sorgt, dass der gesamte Eingangsbereich 90b in Richtung auf die Torsionsschwingungsdämpferanordnung 12b zu vorgespannt ist. Im Bereich der Kopplung der beiden Ringscheibenelemente 130b ist für einen Axialbewegungsanschlag gesorgt. Die Vorspannfeder 140b sorgt damit dafür, dass der Lagerring 110b in festem Lagerungskontakt mit der Fläche 114b an dem Abstützelement 138b bleibt. Beim Aufbau dieses Systems wird wieder so vorgegangen, dass zunächst die Torsionsschwingungsdämpferanordnung 12b an dem Antriebselement festgelegt wird. Dann wird die bereits mit dem Getriebe zusammengefügte Doppelkupplung 14b herangeführt, wobei das äußere Ringscheibenelement 132b mit der Widerlagerplatte 46b bereits fest verbunden ist und, wie man in der Fig.4 erkennt, selbst eine Widerlagerplatte für den ersten Kupplungsbereich 40b bildet. Die beiden Ringscheibenelemente 130b, 132b treten dann in ihrem Kopplungsbereich 134b in Kopplungswechselwirkung, unter Beibehalt der vorangehend angesprochenen Taumelbewegbarkeit der Sekundärseite 24b in begrenztem-Ausmaß.

Durch die vorliegende Erfindung sind verschiedene Möglichkeiten der Kopplung verschiedener Systembereiche einer Doppelkupplungsanordnung vorgesehen, die entweder eine Überbestimmung bei der Festlegung vermeiden und somit auch bei auftretendem Achsversatz oder auftretender Achsrelativneigung Ausgleichsbewegungen zulassen, oder bei vorhandener Überbestimmung auf Grund elastischer Anbindung verschiedener Systembereiche gleichwohl eine gewisse Relativbewegung zulassen.

## Patentansprüche

1. Doppelkupplunganordnung, umfassend:
- eine Torsionsschwingungsdämpferanordnung (12a) mit einer Primärseite (16a), welche mit einem Antriebsorgan zur gemeinsamen Drehung um eine Drehachse (A) fest koppelbar ist, und einer Sekundärseite (24a), welche gegen die Wirkung einer Dämpferelementenanordnung (37a) bezüglich der Primärseite (16a) um die Drehachse (A) drehbar ist,
- eine Doppelkupplung (14a) mit einem Eingangsbereich (90a) und zwei Ausgangsbereichen (66a, 76a), wobei jeder der Ausgangsbereiche (66a, 76a) mit einem von zwei Abtriebsorganen drehfest koppelbar ist,
**dadurch gekennzeichnet, dass** der Eingangsbereich (90a) der Doppelkupplung (14a) bezüglich der Sekundärseite (24a) der Torsionsschwingungsdämpferanordnung (12a) einerseits und bezüglich einer feststehenden Baugruppe (80a) andererseits jeweils über eine elastische Kopplungsanordnung (98a, 104a) abgestützt ist wobei, die elastischen Kopplungsanordnungen (98a, 104a) eine Bewegung des Eingansgsbereichs (90a) der Doppelkupplung (14a) in Radialrichtung oder/und in Axialrichtung zulassen.

2. Doppelkupplungsanordnung nach Anspruch 1,
**dadurch gekennzeichnet, dass** die feststehende Baugruppe (80a) ein Getriebegehäuse (80a) umfasst.

3. Doppelkupplungsanordnung nach einem der Ansprüche 1 oder 2,
**dadurch gekennzeichnet, dass** die Sekundärseite (24a) der Torsionsschwingungsdämpferanordnung (12a) über eine Axiallagerung (94a) und eine Radiallagerung (96a) an der Primärseite (16a) der Torsionsschwingungsdämpferanordnung (12a) abgestützt ist.

4. Doppelkupplungsanordnung, umfassend:
- eine Torsionsschwingungsdämpferanordnung (12b) mit einer Primärseite (16b), welche mit einem Antriebsorgan zur gemeinsamen Drehung um eine Drehachse (A) fest koppelbar ist, und einer Sekundärseite (24b), welche gegen die Wirkung einer Dämpferelementenanordnung (37b) bezüglich der Primärseite (16b) um die Drehachse (A) drehbar ist,
- eine Doppelkupplung (14a) mit einem Eingangsbereich (90b) und zwei Ausgangsbereichen (66b, 76b), wobei jeder der Ausgangsbereiche (66b, 76b) mit einem von zwei Abtriebsorganen drehfest koppelbar ist, **dadurch gekennzeichnet, dass**
die Sekundärseite (24b) der Torsionsschwingungsdämpferanordnung (12b) bezüglich der Primärseite (16b) der Torsionsschwingungsdämpferanordnung (12b) über eine Axial/Radial-Lagerungsanordnung (110b) abgestützt ist, welche ein Verkippen der Sekundärseite (24b) bezüglich der Primärseite (16b) zulässt, wobei die Sekundärseite (24b) der Torsionsschwingungsdämpferanordnung (12b) mit dem Eingangsbereich (90b) der Doppelkupplung (14b) über eine Kopplungsanordnung (134b) drehfest gekoppelt ist, welche ein Verkippen der Sekundärseite (24b) bezüglich des Eingangsbereichs (90b) zulässt.

## Claims

1. Dual clutch assembly, comprising:
- a torsional vibration damper arrangement (12a) having a primary side (16a), which can be firmly coupled to a driving member for joint rotation about an axis of rotation (A), and a secondary side (24a), which is rotatable in relation to the primary side (16a) about the axis of rotation (A) in opposition to the action of a damper element arrangement (37a),
- a dual clutch (14a) having an input area (90a) and two output areas (66a, 76a), each of the output areas (66a, 76a) being rotationally lockable to one of two driven members,
**characterized in that** the input area (90a) of the dual clutch (14a) is supported, in each case via a flexible clutch assembly (98a, 104a), in relation to the secondary side (24a) of the torsional vibration damper arrangement (12a) on the one hand and in relation to a fixed assembly (80a) on the other, the flexible clutch assemblies (98a, 104a) allowing a movement of the input area (90a) of the dual clutch (14a) in a radial direction and/or in an axial direction.

2. Dual clutch assembly according to Claim 1,
**characterized in that** the fixed assembly (80a) comprises a transmission housing (80a).

3. Dual clutch assembly according to either of Claims 1 or 2, **characterized in that** the secondary side (24a) of the torsional vibration damper arrangement (12a) is supported on the primary side (16a) of the torsional vibration damper arrangement (12a) by way of an axial bearing (94a) and radial bearing (96a).

4. Dual clutch assembly, comprising:
- a torsional vibration damper arrangement (12b) having a primary side (16b), which can be firmly coupled to a driving member for joint rotation about an axis of rotation (A), and a secondary side (24b), which is rotatable in relation to the primary side (16b) about the axis of rotation (A) in opposition to the action of a damper element arrangement (37b),
- a dual clutch (14b) having an input area (90b) and two output areas (66b, 76b), each of the output areas (66b, 76b) being rotationally lockable to one of two driven members,
**characterized in that** the secondary side (24b) of the torsional vibration damper arrangement (12b) is supported in relation to the primary side (16b) of the torsional vibration damper arrangement (12b) by way of an axial/radial bearing arrangement (110b), which allows the secondary side (24b) to tilt in relation to the primary side (16b), the secondary side (24b) of the torsional vibration damper arrangement (12b) being rotationally locked to the input area (90b) of the dual clutch (14b) by way of a dual clutch assembly (134b), which allows the secondary side (24b) to tilt in relation to the input area (90b).

## Revendications

1. Ensemble d'embrayage double, comprenant:
- un ensemble (12a) d'amortisseur de vibrations de torsion, avec un côté primaire (16a) qui peut être accouplé fixement à un organe d'entraînement en rotation conjointe autour d'un axe de rotation (A), et avec un côté secondaire (24a) qui est rotatif par rapport au côté primaire (16a) autour de l'axe de rotation (A) à l'encontre de l'action d'un ensemble (37a) d'éléments amortisseurs,
- un embrayage double (14a) avec une région d'entrée (90a) et deux régions de sortie (66a, 76a), chacune des régions de sortie (66a, 76a) pouvant être accouplée en solidarité de rotation à l'un de deux organes menés,
**caractérisé en ce que** la région d'entrée (90a) de l'embrayage double (14a) est soutenue par rapport au côté secondaire (24a) de l'ensemble (12a) d'amortisseur de vibrations de torsion d'une part et par rapport à un sous-ensemble fixe (80a) d'autre part par l'intermédiaire d'un ensemble d'accouplement élastique respectif (98a, 104a), sachant que les ensembles d'accouplement élastiques (98a, 104a) autorisent un mouvement de la région d'entrée (90a) de l'embrayage double (14a) en direction radiale et/ou en direction axiale.

2. Ensemble d'embrayage double selon la revendication 1, **caractérisé en ce que** le sous-ensemble fixe (80a) comprend un carter de boîte (80a).

3. Ensemble d'embrayage double selon la revendication 1 ou 2, **caractérisé en ce que** le côté secondaire (24a) de l'ensemble (12a) d'amortisseur de vibrations de torsion est soutenu sur le côté primaire (16a) de l'ensemble (12a) d'amortisseur de vibrations de torsion par l'intermédiaire d'un palier axial (94a) et d'un palier radial (96a).

4. Ensemble d'embrayage double, comprenant :
- un ensemble (12b) d'amortisseur de vibrations de torsion, avec un côté primaire (16b) qui peut être accouplé fixement à un organe d'entraînement en rotation conjointe autour d'un axe de rotation (A), et avec un côté secondaire (24b) qui est rotatif par rapport au côté primaire (16b) autour de l'axe de rotation (A) à l'encontre de l'action d'un ensemble (37b) d'éléments amortisseurs,
- un embrayage double (14b) avec une région d'entrée (90b) et deux régions de sortie (66b, 76b), chacune des régions de sortie (66b, 76b) pouvant être accouplée en solidarité de rotation à l'un de deux organes menés,
**caractérisé en ce que** le côté secondaire (24b) de l'ensemble (12b) d'amortisseur de vibrations de torsion est soutenu par rapport au côté primaire (16b) de l'ensemble (12b) d'amortisseur de vibrations de torsion par l'intermédiaire d'un ensemble (110b) de palier axial/radial qui autorise un basculement du côté secondaire (24b) par rapport au côté primaire (16b), sachant que le côté secondaire (24b) de l'ensemble (12b) d'amortisseur de vibrations de torsion est accouplé en solidarité de rotation à la région d'entrée (90b) de l'embrayage double (14b) par l'intermédiaire d'un ensemble d'accouplement (134b) qui autorise un basculement du côté secondaire (24b) par rapport à la région d'entrée (90b).
